# EUROPÄISCHE PATENTSCHRIFT

(11) **EP 4 014 803 B1**
(45) Veröffentlichungstag und Bekanntmachung des Hinweises auf die Patenterteilung: **18.10.2023**
(21) Anmeldenummer: 21210504.3
(22) Anmeldetag: 25.11.2021
(51) Int. Cl.: A47J 31/44

(54) **GETRÄNKEBEREITER MIT SENSORVORRICHTUNG**
BEVERAGE MAKER WITH SENSOR DEVICE
MACHINE À BOISSON AVEC DISPOSITIF À CAPTEUR

(30) Priorität: 16.12.2020 BE 202005938
(43) Veröffentlichungstag der Anmeldung: 22.06.2022
(73) Patentinhaber: Miele & Cie. KG, 33332 Gütersloh (DE)
(72) Erfinder: Tembaak, Jutta, 49492 Westerkappeln (DE); Last, Mario, 33739 Bielefeld (DE)

(56) Entgegenhaltungen:
- EP-A1- 2 992 793
- DE-B3-102012 220 995

## Beschreibung

Die Erfindung betrifft einen Getränkebereiter, umfassend
- einen Korpus;
- ein im Korpus angeordnetes Fluidsystem;
- eine Steuereinrichtung zur Steuerung des Fluidsystems zur Zubereitung eines Getränks;
- eine Auslassvorrichtung zur Ausgabe des zubereiteten Getränks;
- eine Zuführvorrichtung zum Zuführen einer weiteren flüssigen Zutat, beispielsweise Milch, umfassend ein Ansaugrohr zum Eintauchen in einen Vorratsbehälter für die flüssige Zutat.

Aus der EP 2 594 172 B1 ist ein Getränkebereiter mit einem entsprechendem Fluidsystem bekannt und einer Zuführvorrichtung zum Ansaugen von Milch aus einem am Gehäuse angedocktem Milchbehälter. Nachteilig hierbei ist, dass dem Anwender keine Information über den Zustand der Milch angegeben wird. Der Anwender muss also selber darauf achten, dass die im Vorratsbehälter befindliche Milch frisch genug für die Getränkezubereitung ist. Sobald der Anwender dies vergisst, kann es vorkommen, dass verdorbene oder im Ansatz übersäuerte Milch zum Getränk verarbeitet wird, das dann insgesamt nicht verzehrt werden kann.

Die DE 10 2012 220 995 B3 offenbart einen Getränkebereiter mit einem Fluidsystem und einer Milchleitung zur Zubereitung eines Getränks. Der Getränkebereiter umfasst ferner einen Sensor, der den PH-Wert der Milch misst, die durch die Milchleitung gefördert wird. Hierbei wird der PH-Wert nur dann erfasst, wenn die Milch während der Getränkezubereitung angesaugt wird.

Der Erfindung liegt somit die Aufgabe zugrunde, einen Getränkebereiter mit einer zuverlässig guten Getränkequalität bereitzustellen.

Erfindungsgemäß wird unter anderem diese Aufgabe durch einen Getränkebereiter mit den Merkmalen des unabhängigen Anspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen darin, dass Milchgetränke insgesamt besser und zuverlässig von guter Qualität zubereitet werden. Insbesondere wird verhindert, dass verdorbene oder im Beginn der Säuerung befindliche Milch für die Zubereitung verwendet wird. Ferner wird vermieden, dass das Leitungssystem, das Milch führt, aufgrund stockender Milch verstopft, wodurch insgesamt aufwändige Reinigungsprozesse vermeiden werden.

Hierzu umfasst die Zuführvorrichtung des Getränkebereiters eine Sensorvorrichtung mit einem Sensormittel und ein Auswertemittel, wobei die Sensorvorrichtung dazu eingerichtet ist, die Gesamtacidität der Flüssigkeit zu erfassen, in die das Sensormittel eingetaucht ist. Die die Steuereinrichtung steht hierbei datentechnisch oder signaltechnisch mit der Sensorvorrichtung in Verbindung, um aufgrund des erfassten Säuregrades Maßnahmen zu ergreifen, die eine Zubereitung eines verdorbenen Getränks verhindern.

Bevorzugt wird als Gesamtacidität der SH-Wert herangezogen, der ein zuverlässiges Maß für den Zustand der Milch bzw. die Eignung zur Verarbeitung in dem Getränkebereiter darstellt.

Erfindungsgemäss umfasst das Sensormittel der Sensorvorrichtung Elektroden zur Messung einer elektrischen Eigenschaft, bevorzugt als photochemischer oder biochemischer Sensor ausgebildet, die sich in dem am Leitungssystem angedockten Behälter befindet. Das Auswertemittel ist dazu ausgebildet, den SH-Wert aufgrund der gemessenen elektrischen Eigenschaft zu bestimmen oder ermitteln und der Steuereinrichtung zuzuführen. In einer bevorzugten Weiterbildung umfasst das Auswertemittel eine Tabelle, Mathematisches Modell oder eine Umrechnungsformel zur Bestimmung des SH Wertes basierend auf den Wertes des Sensors, also der vom Sensor erfassten elektrischen Eigenschaft wie Leitwert, Impedanz oder Kapazität. Das Auswertemittel kann als Rechnereinheit mit einem Mikrocontroller ausgebildet sein, wobei die Tabelle, das mathematische Modell oder die Umrechnungsformel als Programmcode, bevorzugt veränderbarer Programmcode, implementiert ist. Die genannte Funktion kann auch in der Steuereinrichtung implementiert sein, sodass der Mikrocontroller der Steuereinrichtung diese Aufgaben mit übernimmt und kein zusätzlicher Mikrocontroller eingesetzt werden muss.

Erfindungsgemäss ist die Sensorvorrichtung dazu eingerichtet, die elektrischen Eigenschaften zyklisch in zu messen, um einen zeitlichen Verlauf der elektrischen Eigenschaften aufzunehmen. Damit kann die Veränderung des Frischezustandes bzw. Säuerungszustandes der im Vorratsbehälter befindlichen Milch über eine längere Lagerzeit beobachtet werden. Das Maß für den Säuregrad, insbesondere der SH-Wert weist starke Abweichungen aus, die von der Beschaffenheit der bereits frischen Milch abhängen. Aus diesem Grund ist es sinnvoll, die frisch eingefüllte Milch für mehrere Stunden oder Tage zu beobachten. Sobald die Veränderung einen Grenzwert überschritten hat, kann von einer beginnenden Säuerung bzw. fortgeschrittenen Säuerung mit gerinnungsbedingten Ausflockungen ausgegangen werden. Frische Milch weist in der Regel einen SH-Wert im Bereich von 6,5 bis 7,5 auf. Milch im Zustand beginnender Säuerung weist in der Regel einen SH-Wert im Bereich von 7,6 bis 9,6 auf. Milch im Zustand mit dickflockiger Gerinnung weist in der Regel einen SH-Wert größer 9,6 auf. Als Grenzwert für die Veränderung kann für beginnende Säuerung deshalb eine Steigerung um ca. 2 angesehen werden, gegenüber dem erfassten Wert für den Frischezustand. Als Grenzwert für die Veränderung kann für Säuerung mit flockiger Gerinnung deshalb eine Steigerung um 2 angesehen werden, gegenüber dem erfassten Wert für den Frischezustand.

In einer zweckmäßigen Weiterbildung ist das Auswertemittel dazu eingerichtet, die Dynamik, also Größe der Veränderung der elektrischen Größe innerhalb eines vorbestimmten Zeitabschnitts zu bestimmen, und daraus anhand der Tabelle, des Mathematischen Modells oder der Umrechnungsformel den SH Wert zu bestimmen. Kleine Veränderungen führen in der Regel nicht zu einer signifikanten Qualitätsminderung. Sobald die Veränderung der erfassten Größe stärker geschieht, ist dies in der Regel ein Indiz für eine intensive oder starke Veränderung des SH-Wertes. Diese Dynamik kann den von dem mathematischen Modell, der Tabelle oder der Formel zugeführt und entsprechend ausgewertet werden. Insgesamt wird Veränderung der elektrischen Eigenschaft der im Vorratsbehälter befindlichen flüssigen Zutat ermittelt, in Abhängigkeit von der Lagerzeit.

In einer insgesamt zweckmäßigen Ausführung umfasst das Sensormittel zwei zueinander beabstandete Elektroden, die am Einlass des Ansaugrohres angebracht sind. Das Sensormittel befindet sich somit direkt am freien Ende des Ansaugrohres, das in die Milch eintaucht.

In einer zweckmäßigen Weiterbildung bestehen die Elektroden aus zumindest zwei Platten, die parallel beabstandet zueinander angeordnet sind.

In einer bevorzugten Weiterbildung des Sensormittels ist dieses als rohrförmiger Hohlkörper mit segmentierten Mantel ausgebildet ist, wobei die einzelnen Segmente als Elektroden fungieren. Damit kann das als Rohrstück auf das freie Ende das Ansaugrohres aufgesetzt integriert werden und beeinflusst nicht die Strömung. Ferner ist die Zugänglichkeit des Inneren des Ansaugrohres nicht beeinträchtigt, sodass eine einfache Reinigung gegeben ist.

In einer insgesamt zweckmäßigen Ausführung ist die Steuereinrichtung dazu eingerichtet bzw. der Mikrocontroller in der Steuereinrichtung dazu programmiert, das Fluidsystem in Abhängigkeit des erfassten oder bestimmten Säuregrades, bevorzugt SH-Wertes, zu steuern. Die Steuereinrichtung kann dann eine Warnmeldung an den Anwender ausgeben, wenn die bevorratetet Milch nicht mehr geeignet ist zur Getränkezubereitung. Ferner kann die Steuereinrichtung dazu eingerichtet sein, die Getränkezubereitung für milchhaltige Getränke zu unterbinden bzw. eine bereits begonnene Zubereitung zu unterbrechen, wobei insbesondere der Milchbezug verhindert wird.

In einer insgesamt zweckmäßigen Ausführung umfasst der Getränkebereiter ferner eine Bedien- und Anzeigevorrichtung, die mit der Steuereinrichtung in Verbindung steht und zur Bereitstellung von Benutzereingaben und Informationsausgaben ausgebildet ist.

Die Steuereinrichtung ist dazu eingerichtet, eine Information auf der Anzeigevorrichtung auszugeben, wenn der von der Sensorvorrichtung bestimmte Säuregrad bzw. SH-Wert einen Grenzwert überschreitet. Hier kann der absolut ermittelte Säuregrad bzw. SH-Wert oder das Maß für die Änderung herangezogen werden, wie oben erläutert. Als Informationsausgaben können dabei bevorzugt Angaben für den Frischezustand, einen Zustand für beginnenden Säuerung und für Säuerung mit Flockenbildung bereitgestellt werden. Für die ersten beiden Zustände kann ist eine Unterbrechung oder Verweigerung der Getränkezubereitung nicht notwendig. Für den letztgenannten Zustand kann das Getränk nicht zubereitet werden, weil zum einen die Qualität nicht erreicht werden kann und weil die milchführenden Leitungen aufgrund der Flockenbildung verstopfen können.

In einer insgesamt vorteilhaften Ausführung ist der Getränkebereiter als Einbaugerät zum Einbau in einem Schrank ausgebildet mit einer am oder im Korpus eingefügten, von außen zugängliche Nische mit zumindest einer Begrenzungswand, wobei die Auslaufvorrichtung innerhalb der Nische relativ zu dem Korpus und zu dem Getränkebehälterabstellabschnitt bewegbar ausgeführt ist und das Ansaugrohr mit dem Sensormittel in der Nische angeordnet ist oder angekoppelt werden kann. Die Unterbringung der Sensorvorrichtung ist hierbei besonders vorteilhaft, weil der Milchvorratsbehälter mit darin integriertem Ansaugrohr mit Sensormittel mittels einer in der Nische angeordneten Kuppelvorrichtung angedockt werden kann.

Ein Ausführungsbeispiel der Erfindung ist in den Zeichnungen rein schematisch dargestellt und wird nachfolgend näher beschrieben. Es zeigen
- Fig. 1:: einen Getränkebereiter in einer teilweise schematischen Frontansicht;
- Fig. 2:: das Strömungsleitungssystem in schematischer Ansicht und
- Fig. 3, 4:: die Sensorvorrichtung skizziert für verschiedene Ausführungen.

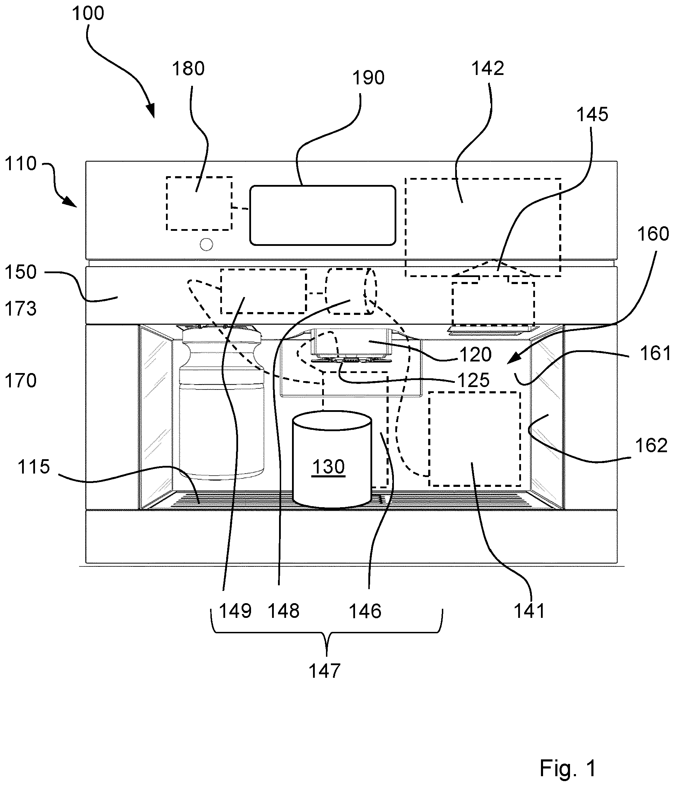

Fig. 1 zeigt eine perspektivische Darstellung einer Heißgetränkemaschine 100 gemäß einem Ausführungsbeispiel. Dabei ist die Heißgetränkemaschine 100 als ein Kaffeevollautomat, in dem dargestellten Beispiel als ein Einbau-Kaffeevollautomat ausgeführt. Die Heißgetränkemaschine 100 weist einen Korpus 110 auf, innerhalb des Korpus sind die Komponenten zum Zubereiten des Heißgetränks untergebracht. Diese sind, schematisch skizziert, die Vorratsbehälter 141 für Wasser und für Kaffeebohnen 142, ein Mahlwerk 145, die Brüheinheit 146 und das Strömungsleitungssystem147 mit Pumpe 148, Durchlauferhitzer 149 und Sensoren zur Messung von Wassertemperatur und/oder Durchflussmenge. Die Heißgetränkemaschine 100 besitzt ferner eine Bedien- und Anzeigevorrichtung 190 zur Eingabe der Benutzerwünsche, die mit einer Steuereinrichtung 180 in Verbindung steht zum Steuern der Komponenten zum Zubereiten des gewünschten Heißgetränks und einen Getränkebehälterabstellabschnitt oder eine Abstellfläche 115 auf. Dabei ist der Getränkebehälterabstellabschnitt 115 als eingeformte oder anders hergestellte Nische 160 in der frontseitigen Tür 150 zum Verschließen des Inneren des Korpus 110 bereitgestellt. Der Getränkebehälterabstellabschnitt 115 ist zum Abstellen von Getränkebehältern 130, beispielsweise Kaffeetassen, ausgebildet.

Ferner weist die Heißgetränkemaschine 100 eine Auslaufvorrichtung 120 mit Auslaufdüsen 125 auf. Die Auslaufvorrichtung 120 ist in einer bevorzugten Ausführung relativ zu dem Korpus 110 bzw. relativ zu dem Getränkebehälterabstellabschnitt 115 bewegbar ausgeführt. Dabei ist die Auslaufvorrichtung 120 in einer in Figur 1 dargestellten Betriebsposition der Heißgetränkemaschine 100 oberhalb des Getränkebehälterabstellabschnittes 115 angeordnet. Die Auslaufvorrichtung 120 ist zu dem Getränkebehälterabstellabschnitt 115 hin und von dem Getränkebehälterabstellabschnitt 115 weg verfahrbar, beispielsweise manuell betätigt oder durch eine Antriebseinrichtung in dem Korpus 110. Die Auslaufvorrichtung 120 ist insgesamt dazu ausgebildet, zumindest einen Getränkebehälter 130 zu Befüllen.

Der Abstellabschnitt 115 befindet sich in der Nische 160, die durch zwei gegenüberliegende Seitenwände 162 und der dem Korpus 110 zugewandten Rückwand 161 begrenzt ist. Die Nische 160 befindet sich in der Tür 150, sodass die begrenzenden Wände 161, 162 und die Abstellfläche 115 mit bewegt werden, wenn die Tür 150 aufgeschwenkt wird.

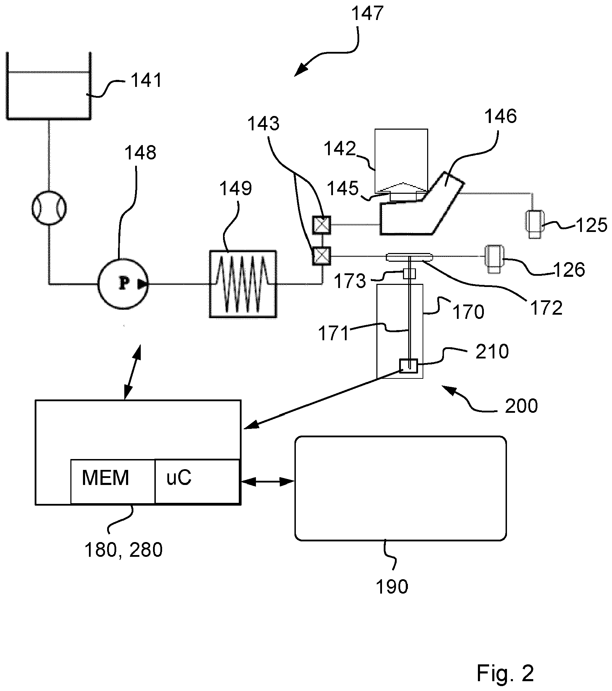

Fig. 2 zeigt ein schematisches Blockschaltbild des Strömungsleitungssystems 140 mit der Steuerung 180, 190 eines Getränkeautomaten 100 gemäß einem Ausführungsbeispiel. Die hier dargestellte Anordnung kann in dem in Figur 1 beschriebenen Getränkeautomat 100 eingesetzt sein.

Der Getränkeautomat 100 weist einen Flüssigkeitsspeicher 141 auf, der ausgebildet ist, um Flüssigkeit 202, beispielsweise Wasser, zu speichern. Die Flüssigkeit wird sowohl für eine Getränkebereitung als auch für das Erzeugen von Dampf zum Ansaugen und Aufschäumen der in dem Flüssigkeitsvorrat 170 bevorrateten weiteren Flüssigkeit, bevorzugt Milch, verwendet.

Dazu ist der Flüssigkeitsspeicher 141 über eine Leitung mit einer Pumpeinrichtung 148 verbunden, die auch als Pumpe bezeichnet wird. Die Pumpeinrichtung 148 ist ausgebildet, um die Flüssigkeit zu einer Heizeinrichtung 149 zu pumpen, in der die Flüssigkeit erhitzt wird und gegebenenfalls Dampf erzeugt wird. Die von der Heizeinrichtung 149 erhitzte Flüssigkeit kann zum einen in flüssiger oder dampfförmiger Form zu einer Brüheinheit 147 des Getränkeautomaten 100 geführt werden, um beispielsweise ein Kaffeegetränk zuzubereiten, das anschließend durch die Auslassdüse 125 ausgegeben wird. Zusätzlich kann der von der Heizeinrichtung 149 erzeugte Dampf zu einer Mischkammer 172 bzw. Aufschäumeinrichtung des Getränkeautomaten 100 geführt werden. Die Aufschäumeinrichtung 172 ist dabei ausgebildet, um die weitere Flüssigkeit, beispielsweise Milch, aus dem Flüssigkeitsvorrat 170 unter Verwendung des Dampfes anzusaugen und aufzuschäumen und zur Auslassdüse 126 zu führen. Dazu wird die weitere Flüssigkeit aus dem Flüssigkeitsvorrat 170 über die Zuführleitung 171 in die Mischkammer 172 zugeführt. Durch den in die Mischkammer 172 gelangenden Dampf erhitzt sich die Mischkammer 172.

In einer bevorzugten Ausführung ist in der Leitung, die der Heizeinrichtung 149 nachgeschaltet ist, eine Ventilvorrichtung 143 angeordnet, um wahlweise die Strömungswege des erhitzten Wassers zur Brüheinheit 147 oder zur Mischkammer 172 zu leiten. Die Ventilvorrichtung 143 ist ferner derart ausgeführt, dass sie den Durchlass zur Mischkammer 172 freigeben oder sperren kann. Das Ansaugrohr 171 ist mittels einer Koppelvorrichtung 173 an der Mischkammer 172 bevorzugt lösbar angeschlossen.

Zu erkennen ist ferner, dass das Ansaugrohr 171 mit einem Sensormittel 210 versehen ist, das der Sensorvorrichtung 200 zur Erkennung der Milchqualität zugeordnet ist. Das Sensormittel 210 umfasst weitere Komponenten, um elektrische Eigenschaften, wie Leitwert, Impedanz oder Kapazität, direkt zu messen, wobei die Auswerteeinrichtung 280 aus den gemessenen Werten den Säuregrad der Flüssigkeit ermittelt oder berechnet.

Die Steuereinrichtung 180 umfasst einen Mikrocontroller uC mit einem entsprechend zugeordneten Speicher MEM als Programm- und Datenspeicher. Die Steuereinrichtung 180 steht mit der Bedien- und Anzeigevorrichtung 190 in Datenverbindung, um Benutzereingaben aufgrund Bedienhandlungen zu empfangen und Informationen und Warnhinweise an den Benutzer auszugeben. Die Bedien- und Anzeigevorrichtung 190 umfasst bevorzugt ein Display, um Informationen verständlich in Textform oder grafisch an den Benutzer auszugeben. Das Display kann bevorzugt als Berührbildschirm 190 ausgebildet sein, die eine besonders komfortable und vielseitige Bedienung bereitstellt.

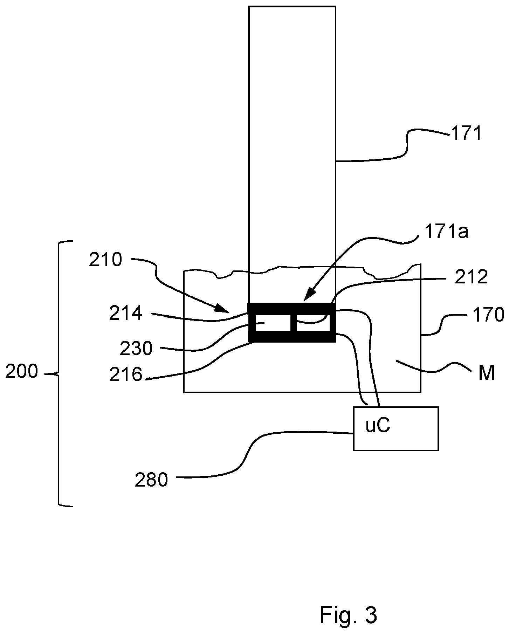

Fig. 3 zeigt die Sensorvorrichtung 200 in einer ersten Ausführung. Das Sensormittel 210 umfasst einen Träger 212 oder ein Trägerrahmen, an dem zwei Platten 214, 216 parallel beabstandet zueinander angebracht sind. Die Platten 214, 216 dienen als Elektroden, um elektrische Eigenschaften der Flüssigkeit M zu messen, die sich im Raum 230 zwischen den beiden Platten 214, 216 befindet. Die Platten 214, 216 sind am freien Ende bzw. an der Einlassseite 171a des Ansaugrohres 171 angebracht, wobei die Platten 214, 216 parallel zum Querschnitt der Rohröffnung 171a angeordnet sind. Der Abstand bzw. der Raum 230 zwischen den beiden Platten 214, 216 stellt die Einlassöffnung 171a für das Ansaugrohr 171 bereit.

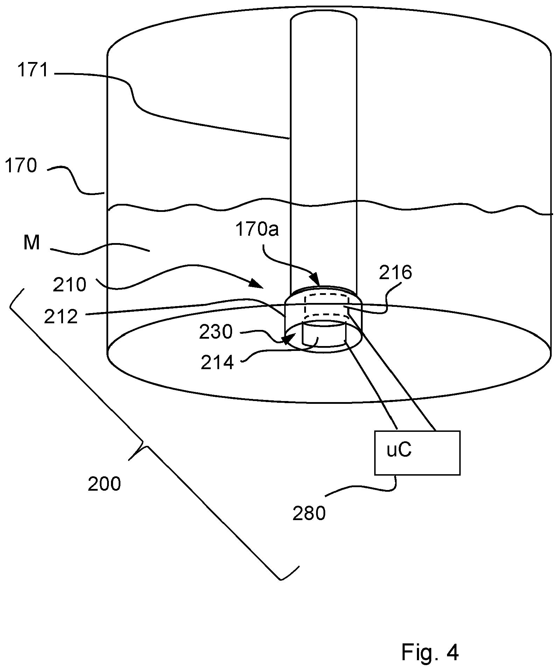

Fig. 4 zeigt die Sensorvorrichtung 200 in einer zweiten Ausführung. Das Sensormittel 210 umfasst einen Träger 212, der als zylindrischer Hohlkörper ausgebildet ist. Die beiden Platten 214, 216 sind dabei als Mantelsegmente geformt und gegenüberliegend im Zylindermantel 212 angebracht. Die Flächen der Mantelsegmente 214, 216 sind hierbei beabstandet zueinander. Die mantelsegmentförmigen Platten 214, 216 dienen als Elektroden, um elektrische Eigenschaften der Flüssigkeit M zu messen, die sich im Raum zwischen den beiden Platten 214, 216 befindet. Die Platten 214, 216 mit dem zylinderförmigen Träger 212 sind am freien Ende bzw. an der Einlassseite 171a des Ansaugrohres 171 angebracht. Der Abstand bzw. der Raum 230 zwischen den beiden Platten 214, 216 stellt die Einlassöffnung 171a für das Ansaugrohr 171 bereit.

In beiden Ausführungen sind die Platten 214, 216 signaltechnisch mit dem Auswertemittel 280 verbunden. Das Auswertemittel 280 kann die Elektroden 214, 216 anregen und/oder elektrische Eigenschaften empfangen und zu einem digitalen Wert wandeln, der wiederrum der Steuereinrichtung 180 zugeführt werden kann zur weiteren Bearbeitung. Das Auswertemittel 280 kann auch als Teil der Steuereinrichtung implementiert sein bzw. die Steuereinrichtung 180 kann dazu ausgebildet sein, ein Teil der Aufgaben oder alle Aufgaben des Auswertemittels 280 zu übernehmen. Dies gilt für alle Ausführungen der Erfindung.

Die Richtungs- und Positionsangaben für alle Ausführungen beziehen sich auf die betriebsgemäße Position der Getränkemaschine 100.

## Patentansprüche

1. Getränkebereiter (100), umfassend
- einen Korpus (110);
- ein im Korpus angeordnetes Fluidsystem (147);
- eine Steuereinrichtung (180) zur Steuerung des Fluidsystems (147) zur Zubereitung eines Getränks;
- eine Auslassvorrichtung (120, 125, 126) zur Ausgabe des zubereiteten Getränks;
- eine Zuführvorrichtung (171, 172) zum Zuführen einer weiteren flüssigen Zutat, beispielsweise Milch (M), umfassend ein Ansaugrohr (171) zum Eintauchen in einen Vorratsbehälter (170) für die flüssige Zutat (M);
wobei die Zuführvorrichtung (171, 172) eine Sensorvorrichtung (200) mit einem Sensormittel (210) und ein Auswertemittel (280) umfasst, wobei die Sensorvorrichtung (200) dazu eingerichtet ist, die Gesamtacidität der flüssigen Zutat (M) zu erfassen, wobei die Steuereinrichtung (180) mit der Sensorvorrichtung (200) in Verbindung steht,
**dadurch gekennzeichnet,**
**dass** das Sensormittel (210) Elektroden (214, 216) zur Messung einer elektrischen Eigenschaft umfasst , bevorzugt als photochemischer oder biochemischer Sensor ausgebildet, wobei das Auswertemittel (280) dazu ausgebildet ist, den Säuregrad, bevorzugt den SH-Wert, anhand der gemessenen Eigenschaft zu bestimmen oder ermitteln und der Steuereinrichtung (180) zuzuführen, wobei die Sensorvorrichtung (200) dazu eingerichtet ist, die elektrischen Eigenschaften zyklisch zu messen, um einen zeitlichen Verlauf der elektrischen Eigenschaften aufzunehmen.

2. Getränkebereiter nach Anspruch 1,
**dadurch gekennzeichnet,**
**dass** das Auswertemittel (208) eine Tabelle, Mathematisches Modell oder eine Umrechnungsformel umfasst zur Bestimmung des SH Wertes basierend auf den Werten des Sensormittels (210).

3. Getränkebereiter nach Anspruch 2,
**dadurch gekennzeichnet**
**dass** das Auswertemittel (280) dazu eingerichtet ist, die Dynamik, also Größe der Veränderung der elektrischen Größe innerhalb eines vorbestimmten Zeitabschnitts zu bestimmen, und daraus anhand der Tabelle, des Mathematischen Modells oder der Umrechnungsformel die Gesamtacidität bzw. SH Wert zu bestimmen.

4. Getränkebereiter nach einem der Ansprüche 1 bis 3,
**dadurch gekennzeichnet,**
**dass** das Sensormittel (210) zwei zueinander beabstandete Elektroden (214, 216) umfasst, die am Einlass (171a) des Ansaugrohres (170) angebracht sind.

5. Getränkebereiter nach Anspruch 4,
**dadurch gekennzeichnet,**
**dass** die Elektroden (214, 216) aus Platten bestehen, die parallel beabstandet zueinander angeordnet sind.

6. Getränkebereiter nach Anspruch 4,
**dadurch gekennzeichnet,**
**dass** das Sensormittel (210) als rohrförmiger Hohlkörper (212) mit segmentierten Mantel ausgebildet ist, wobei die einzelnen Segmente (214, 216) als Elektroden fungieren.

7. Getränkebereiter nach einem der Ansprüche 1 bis 6,
**dadurch gekennzeichnet,**
**dass** die Steuereinrichtung (180) dazu eingerichtet ist, das Fluidsystem (147) in Abhängigkeit des erfassten oder bestimmten Säuregrades, bevorzugt SH-Wertes, zu steuern.

8. Getränkebereiter nach einem der Ansprüche 1 bis 7,
ferner umfassend eine Bedien- und Anzeigevorrichtung (190), die mit der Steuereinrichtung (180) in Verbindung steht und zur Bereitstellung von Benutzereingaben und Informationsausgaben ausgebildet ist,
**dadurch gekennzeichnet,**
**dass** die Steuereinrichtung (180) dazu eingerichtet ist, eine Information auf der Anzeigevorrichtung auszugeben, wenn der ermittelte Säuregrad bzw. SH-Wert einen Grenzwert überschreitet.

9. Getränkebereiter nach Anspruch 8,
**dadurch gekennzeichnet,**
**dass** die Steuereinrichtung (180) und die Bedien- und Anzeigevorrichtung (190) dazu eingerichtet ist, die Ausgabe der Information in zumindest drei Stufen bereitzustellen, wobei die erste Stufe eine Zulässigkeitsbestätigung, die zweite Stufe Warnhinweis für beginnende Säuerung und die dritte Stufe ein Verbotshinweis für den Milchbezug ist.

10. Getränkebereiter nach einem der Ansprüche 1 bis 9, wobei der Getränkebereiter (100) als Einbaugerät zum Einbau in einem Schrank ausgebildet ist, umfassend
- am oder im Korpus (110) eingefügte, von außen zugängliche Nische (160) mit zumindest einer Begrenzungswand (161, 162), wobei die Auslaufvorrichtung (120, 125, 126) innerhalb der Nische (160) relativ zu dem Korpus (110) und zu dem Getränkebehälterabstellabschnitt (115) bewegbar ausgeführt ist und das Ansaugrohr (171) mit dem Sensormittel (210) in der Nische (160) angeordnet ist oder angekoppelt werden kann.

## Claims

1. Beverage preparation means (100), comprising
- a body (110);
- a fluid system (147) arranged in the body;
- a control device (180) for controlling the fluid system (147) for preparing a beverage;
- an outlet device (120, 125, 126) for dispensing the prepared beverage;
- a feed device (171.172) for supplying a further liquid ingredient, for example milk (M), comprising an intake tube (171) for immersion into a storage container (170) for the liquid ingredient (M);
the feed device (171, 172) comprising a sensor device (200) having a sensor means (210) and an evaluation means (280), the sensor device (200) being configured to detect the total acidity of the liquid ingredient (M), the control device (180) being connected to the sensor device (200),
**characterised in that**
the sensor means (210) comprises electrodes (214, 216) for measuring an electrical property, preferably in the form of a photochemical or biochemical sensor, the evaluation means (280) being designed to determine or ascertain the acidity degree, preferably the SH value, on the basis of the measured property and to supply it to the control device (180), the sensor device (200) being configured to cyclically measure the electrical properties in order to record a profile over time of the electrical properties.

2. Beverage preparation means according to claim 1,
**characterised in that**
the evaluation means (208) comprises a table, mathematical model or conversion formula for determining the SH value on the basis of the values of the sensor means (210).

3. Beverage preparation means according to claim 2,
**characterised in that**
the evaluation means (280) is designed to determine the dynamics, that is to say the size of the change in the electrical variable within a predetermined time period, and to determine therefrom the total acidity or SH value on the basis of the table, the mathematical model or the conversion formula.

4. Beverage preparation means according to any of claims 1 to 3,
**characterised in that**
the sensor means (210) comprises two spaced apart electrodes (214, 216) attached to the inlet (171a) of the intake tube (170).

5. Beverage preparation means according to claim 4,
**characterised in that**
the electrodes (214, 216) consist of plates arranged in parallel and spaced apart from one another.

6. Beverage preparation means according to claim 4,
**characterised in that**
the sensor means (210) is formed as a tubular hollow body (212) having a segmented sheath, the individual segments (214, 216) functioning as electrodes.

7. Beverage preparation means according to any of claims 1 to 6,
**characterised in that**
the control device (180) is configured to control the fluid system (147) on the basis of the detected or determined acidity degree, preferably SH value.

8. Beverage preparation means according to any of claims 1 to 7,
further comprising an operating and display device (190), which is connected to the control device (180) and is designed to provide user inputs and information outputs,
**characterised in that**
the control device (180) is configured to output information on the display device when the determined acidity degree or SH value exceeds a limit value.

9. Beverage preparation means according to claim 8,
**characterised in that**
the control device (180) and the operating and display device (190) are configured to provide the output of the Information in at least three stages, the first stage being an authorisation confirmation, the second stage being a warning message for incipient acidification, and the third stage being a prohibition indication for the milk supply.

10. Beverage preparation means according to any of claims 1 to 9, wherein the beverage preparation means (100) is designed as a built-in appliance to be installed in a cupboard, comprising
- recessed region (160), which is inserted on or in the body (110), is accessible from the outside and has at least one delimiting wall (161, 162), wherein the discharge device (120, 125, 126) is movable within the recessed region (160) relative to the body (110) and to the beverage container placement portion (115), and the intake tube (171) having the sensor means (210) is arranged in or can be coupled to the recessed region (160).

## Revendications

1. Agencement de préparation de boissons (100), comprenant
- un corps (110) ;
- un système de fluide (147) disposé dans le corps ;
- un appareil de commande (180) pour la commande du système de fluide (147) pour la préparation d'une boisson ;
- un dispositif de sortie (120, 125, 126) pour la distribution de la boisson préparée ;
- un dispositif d'alimentation (171, 172) pour l'alimentation d'un autre ingrédient liquide, par exemple du lait (M), comprenant un tube d'aspiration (171) pour l'immersion dans un récipient de stockage (170) pour l'ingrédient liquide (M) ;
dans lequel le dispositif d'alimentation (171, 172) comprend un dispositif capteur (200) comportant un moyen capteur (210) et un moyen d'évaluation (280), dans lequel le dispositif capteur (200) est configuré pour détecter l'acidité totale de l'ingrédient liquide (M), dans lequel l'appareil de commande (180) est en liaison avec le dispositif capteur (200), **caractérisé en ce que**
le moyen capteur (210) comprend des électrodes (214, 216) pour la mesure d'une propriété électrique, de préférence est réalisé sous la forme d'un capteur photochimique ou biochimique, dans lequel le moyen d'évaluation (280) est réalisé pour déterminer ou définir le degré d'acidité, de préférence le degré SH, au moyen de la propriété mesurée et pour le fournir à l'appareil de commande (180), dans lequel le dispositif capteur (200) est configuré pour mesurer les propriétés électriques de manière cyclique afin d'enregistrer une évolution dans le temps des propriétés électriques.

2. Agencement de préparation de boissons selon la revendication 1,
**caractérisé en ce que**
le moyen d'évaluation (208) comprend un tableau, un modèle mathématique ou une formule de conversion pour la détermination du degré SH sur la base des valeurs du moyen capteur (210).

3. Agencement de préparation de boissons selon la revendication 2,
**caractérisé en ce que**
le moyen d'évaluation (280) est configuré pour déterminer la dynamique, c'est-à-dire la grandeur de la variation de la grandeur électrique dans une période de temps prédéterminée, et pour déterminer à partir de celle-ci, au moyen du tableau, du modèle mathématique ou de la formule de conversion, l'acidité totale ou le degré SH.

4. Agencement de préparation de boissons selon l'une des revendications 1 à 3,
**caractérisé en ce que**
le moyen capteur (210) comprend deux électrodes (214, 216) espacées l'une de l'autre et montées au niveau de l'entrée (171a) du tube d'aspiration (170).

5. Agencement de préparation de boissons selon la revendication 4,
**caractérisé en ce que**
les électrodes (214, 216) sont constituées de plaques qui sont disposées à distance les unes des autres de manière parallèle.

6. Agencement de préparation de boissons selon la revendication 4,
**caractérisé en ce que**
le moyen capteur (210) est réalisé comme un corps creux tubulaire (212) comportant une enveloppe segmentée, dans lequel les segments individuels (214, 216) servent d'électrodes.

7. Agencement de préparation de boissons selon l'une des revendications 1 à 6,
**caractérisé en ce que**
l'appareil de commande (180) est configuré pour commander le système de fluide (147) en fonction du degré d'acidité détecté ou déterminé, de préférence en fonction du degré SH.

8. Agencement de préparation de boissons selon l'une des revendications 1 à 7,
comprenant en outre un dispositif de manipulation et d'affichage (190) qui est en liaison avec l'appareil de commande (180) et est réalisé pour mettre à disposition des entrées utilisateur et des émissions d'informations,
**caractérisé en ce que**
l'appareil de commande (180) est configuré pour émettre des informations sur le dispositif d'affichage lorsque le degré d'acidité ou le degré SH défini dépasse une valeur limite.

9. Agencement de préparation de boissons selon la revendication 8,
**caractérisé en ce que**
l'appareil de commande (180) et le dispositif de manipulation et d'affichage (190) sont configurés pour mettre à disposition l'émission des informations en au moins trois étapes, dans lequel la première étape est une confirmation d'admissibilité, la deuxième étape est une indication d'avertissement pour le début de l'acidification et la troisième étape est une indication d'interdiction d'approvisionnement en lait.

10. Agencement de préparation de boissons selon l'une des revendications 1 à 9, dans lequel l'agencement de préparation de boissons (100) est réalisé en tant qu'appareil encastrable destiné à être encastré dans une armoire, comprenant
- niche (160) accessible depuis l'extérieur et insérée sur ou dans le corps (110) et comportant au moins une paroi de délimitation (161, 162), dans lequel le dispositif d'écoulement (120, 125, 126) est conçu de manière à pouvoir être déplacé à l'intérieur de la niche (160) par rapport au corps (110) et à la section de dépôt de récipient pour boisson (115) et le tube d'aspiration (171) est disposé avec le moyen capteur (210) dans la niche (160) ou peut être accouplé à celui-ci.
